# EUROPÄISCHE PATENTSCHRIFT

(11) **EP 0 934 507 B1**
(45) Veröffentlichungstag und Bekanntmachung des Hinweises auf die Patenterteilung: **07.08.2002**
(21) Anmeldenummer: 98938611.5
(22) Anmeldetag: 22.05.1998
(51) Int. Cl.: G01D 1/06

(54) **GLEITWEG-SENDEEINRICHTUNG FÜR DAS INSTRUMENTENLANDESYSTEM ILS**
INSTRUMENT LANDING SYSTEM (ILS) FOR GLIDE PATH TRANSMITTER DEVICE
DISPOSITIF EMETTEUR D'ALIGNEMENT DE DESCENTE POUR SYSTEME D'ATTERRISSAGE AUX INSTRUMENTS (ILS)

(30) Priorität: 31.05.1997 DE 19722913
(43) Veröffentlichungstag der Anmeldung: 11.08.1999
(73) Patentinhaber: THALES ATM NAVIGATION GmbH, 70435 Stuttgart (DE)
(72) Erfinder: RUPPRECHT, Rainer, D-69126 Heidelberg (DE); STAMMELBACH, Jürgen, D-70376 Stuttgart (DE); KLEIBER, Herbert, D-71638 Ludwigsburg (DE)
(74) Vertreter: Albert, Claude
(86) Internationale Anmeldenummer: EP9803661
(87) Internationale Veröffentlichungsnummer: WO9854546

(56) Entgegenhaltungen:
- DE-A- 3 029 169
- DE-A- 3 332 541
- PFUHL CHR ET AL: "40 YEARS OF USING INSTRUMENT LANDING SYSTEMS (ILS)" ELECTRICAL COMMUNICATION,1. Januar 1993, Seiten 41-50, XP000360409

## Beschreibung

Die Erfindung betrifft eine Gleitweg-Sendeeinrichtung für das Instrumentenlandesystem ILS mit mehrere Antennenstrahlern, über die niederfrequent modulierte, unterschiedliche Träger- und Seitenbandanteile enthaltende Hochfrequenzsignale abgestrahlt werden, die sich im Fernfeld überlagern und dort ein von Luftfahrzeugen auswertbares Führungs-Signal bilden, wobei die Phasen der Trägerschwingungen der das Führungs-Signal bildenden abzustrahlenden Hochfrequenzsignale in einer festen Relation zueinander stehen.

Bei bekannten derartigen Anlagen, insbesondere bei einem sogenannten ILS M-Type Array sowie auch B-Type Array, werden, wie im Dokument "40 Years of Using Instrument Landing Systems (ILS)", Pfuhl Chr., Greving G. und Mandelka G., Electrical Communication, ersten Viertel 1993 beschrieben, über in unterschiedlicher Höhe über dem Erdboden angeordnete Antennen A1, A2 und A3 bzw. A1 und A2 beim B-Type Array Träger- (CSB) und Seitenbandsignale (SBO) abgestrahlt. Die Signale überlagern sich im Fernfeld und bilden dort dem ILS-Standard entsprechende Führungs-Signale, die von Luftfahrzeugen auswertbar sind. Bekanntlich erhält nicht jede Antenne ausschließlich eine einzige Signalkomponente, sondern einigen Antennen müssen mehrere einander überlagerte Signalkomponenten zugeführt werden. Die Erzeugung des gewünschten Hochfrequenzsignals erfolgt dabei in einem Speisenetzwerk, nämlich einem sogenannten Lastverteiler, durch Addition der bereits auf die erforderliche Ausgangsleistung verstärkten reinen Trägersignale (CSB) und Seitenbandsignale (SBO). Anpassungen der Phase, die zur möglichst exakten Einstellung des Gleitwegs der ILS-Anlage insbesondere bei der erstmaligen Einrichtung der Anlage erforderlich sind, erfordern in der Nähe der Antennen angeordnete Phasenschieber, die von Hand eingestellt werden müssen. Der Lastverteiler ist aufwendig und störungsanfällig.

Der Erfindung liegt die Aufgabe zugrunde, eine einfachere Sendeeinrichtung anzugeben. Diese Aufgabe wird gemäß dem kennzeichnenden Teil des Anspruchs 1 dadurch gelöst, daß für jedes der einem Antennenstrahler zugeführten Hochfrequenzsignale ein separater, digital gesteuerter Modulator vorhanden ist, der Phase und Amplitude einer ihm zugeführten Hochfrequenzschwingung nach einem vorgegebenen Muster moduliert und das modulierte Hochfrequenzsignal in den ihm zugeordneten Antennenstrahler einspeist.

Bei der Erfindung wird somit die abzustrahlende Hochfrequenz nicht durch einen Lastverteiler erzeugt, sondern es werden bei der Modulation solche Signale erzeugt, die ohne einen Lastverteiler, also ohne komplizierte und aufwendige Überlagerung in der Nähe der Antenne, direkt jeweils einer einzelnen Antenne zugeführt werden können. Lediglich dann, wenn noch das Clearance-Signal, wie bei bekannten Anlagen ebenfalls üblich, erzeugt wird, ist dieses im allgemeinen in zwei der drei Antennen einzukoppeln, wofür einfache Leistungskoppler, insbesondere 3dB-Koppler, verwendet werden können. Weiter ist von Vorteil, daß durch Beeinflussung der Modulatoren die Phase der den Antennen zugeführten Signale geändert werden kann, so daß dort von Hand betätigte Phasenschieber entfallen können. Die Beeinflussung der Modulatoren ist rein elektrisch möglich und somit auch einer Fernsteuerung und einer automatischen Regelung in einfacher Weise zugänglich.

Die Erfindung erlaubt es in vorteilhafter weise, wenn der Gleitweg mit Hilfe eines Flugzeugs vermessen wird, die notwendige Einstellung abhängig vom Ergebnis der Messung und den Systemanforderungen schnellstens durchzuführen, so daß der Zeitbedarf für das Vermessungsflugzeug und somit die Kosten der Vermessung und der Zeitbedarf für die Einrichtung der Anlage verringert werden können, weil durch Wegfall der von Hand einzustellenden Phasenschieber die nötigen Einstellungen schneller erfolgen können.

Bei einer Ausführungsform der Erfindung ist ein Modulationssignalgenerator zum Erzeugen des dem jeweiligen Modulator zugeführten Musters vorgesehen, und es ist der Modulationssignalgenerator derart ausgebildet, daß er das Muster aufgrund mindestens einer in einem Speicher digital gespeicherten Wellenform erzeugt. Ein Vorteil liegt dabei darin, daß aufgrund der digitalen Speicherung eine genaue schnelle Berechnung des Musters und eine einfache Änderung möglich ist.

Bei einer Ausführungsform der Erfindung ist vorgesehen, daß dem Modulationssignalgenerator ein weiterer Speicher zugeordnet ist, in dem mindestens ein Muster nach seiner Erzeugung aus der mindestens einen digital gespeicherten Wellenform abgespeichert ist, und aus dem es zwecks Zuführung zu dem zugeordneten Modulator ausgelesen wird. Ein Vorteil liegt dabei darin, daß die korrigierten Stellwerte für längere Zeit ohne ständige neue Berechnung verwendet werden können.

Bei einer Ausführungsform der Erfindung ist vorgesehen, daß sie zusätzlich zum Erzeugen eines Clearance-Signals ausgebildet ist, und daß Koppeleinrichtungen vorgesehen sind, um das Clearance-Signal zu den gewünschten Antennen zu koppeln. Ein Vorteil liegt dabei darin, daß auch das Clearance-Signal mit der erfindungsgemäßen Vorrichtung verarbeitbar ist.

Bei einer Ausführungsform der Erfindung ist vorgesehen, daß sie zusätzlich zum Erzeugen eines Clearance-Signals ausgebildet ist, und daß das Clearance-Signal ebenfalls durch einen Modulator, der von einem vorgegebenen Muster eingestellt wird, erzeugt wird. Ein Vorteil liegt dabei darin, daß das Prinzip der Erfindung auch für die Erzeugung des Clearance-Signals anwendbar ist.

Bei einer Ausführungsform der Erfindung ist vorgesehen, daß Meßsignale, die für die abgestrahlten Hochfrequenzsignale bezüglich Amplitude und Phase charakteristisch sind, einer Regeleinrichtung zugeführt werden, dort mit Sollwerten verglichen werden, und daß dann, wenn eine Abweichung von den Sollwerten einen bestimmten Schwellenwert überschreitet, eine Regelung vorgenommen wird derart, daß mindestens eines der Muster verändert wird, bis der Schwellenwert nicht mehr unterschritten wird. Ein Vorteil liegt dabei darin, daß eine einfache Korrektur der abgestrahlten Antennensignale möglich ist.

Bei einer Ausführungsform der Erfindung ist eine Fernsteuereinrichtung vorgesehen, die die Verbindung mit entfernt angeordneten Steuerungsgeräten ermöglicht, derart, daß durch die Fernsteuerungsgeräte die Anlage aus der Ferne einstellbar und steuerbar ist. Dies ist für die Wartung und Handhabung vorteilhaft.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein.

### Die Figuren zeigen:

Fig. 1 ein Prinzip-Blockschaltbild eines ersten Ausführungsbeispiels einer Gleitweg-Sendeeinrichtung mit Erzeugung des Führungs-Signals,
Fig. 2 ein erweitertes Blockschaltbild, in dem der Modulations-Signalgenerator und seine Verbindung mit anderen Einrichtungen gezeigt ist,
Fig. 3 eine der Fig. 1 entsprechende Darstellung eines zweiten Ausführungsbeispiels für eine Sendeeinrichtung mit zusätzlicher Erzeugung eines Clearance-Signals.

Die Erfindung wird anhand einer Sendeeinrichtung zur Erzeugung der Signale für drei Antennen A1, A2 und A3 erläutert.

Vorab werden kurz die an sich bekannte Anordnung dieser Antennen und deren abgestrahlte Hochfrequenzsignale für die Erzeugung der Führungs-Signale erläutert. Die Antenne A1 ist dem Erdboden am nächsten, die Antenne A3 hat die größte Höhe über dem Erdboden. Der Erdboden bewirkt durch seine elektrische Leitfähigkeit eine Reflexion der abgestrahlten Signale und trägt dadurch zur Bildung des vertikalen Richtdiagramms bei.

Die Antennen A1 und A2 werden mit Signalen CSB-1 und CSB-2 des sogenannten Trägersignals (das selbst amplitudenmoduliert ist) gespeist, wobei die üblichen Modulationsfrequenzen und Modulationsgrade, 90 Hz mit 46%, 150 Hz mit 34% für CSB-1 und 90 Hz mit 64%, 150 Hz mit 16% für CSB-2 betragen. Diese Zahlenwerte sind für das Prinzip der Erfindung jedoch nicht zwingend. Die Antenne A3 strahlt das Seitenbandsignal SBO (SBO = "Side Band Only"), ohne den Träger ab. Durch Überlagerung des Trägersignals und des Seitenbandsignals im Fernfeld entsteht ein von Luftfahrzeugen auswertbares amplitudenmoduliertes Signal, dessen Differenz der Modulationsgrade von der Abweichung vom vorgeschriebenen Gleitweg abhängt. Je nach dem, ob das Luftfahrzeug zu hoch oder zu niedrig fliegt, empfängt es die Modulation mit mehr 90 Hz bzw. mit mehr 150 Hz Signalanteil, was dem Piloten die Weisung "fliege tiefer" bzw. "fliege höher" vermittelt. Es ist bekannt, zusätzlich noch ein sogenanntes Clearance-Signal abzustrahlen, das in die Antennen A1 und A3 eingespeist wird. Die abgestrahlten Antennensignale weisen in Höhenrichtung keine Symmetrie auf.

Das Vorhandensein des Clearance-Signals ist für das Prinzip der Erfindung nicht wichtig, jedoch kann mit einer erfindungsgemäßen Anlage auch das Clearance-Signal erzeugt und den entsprechenden Antennen zugeführt werden, wie dies unten beschrieben wird.

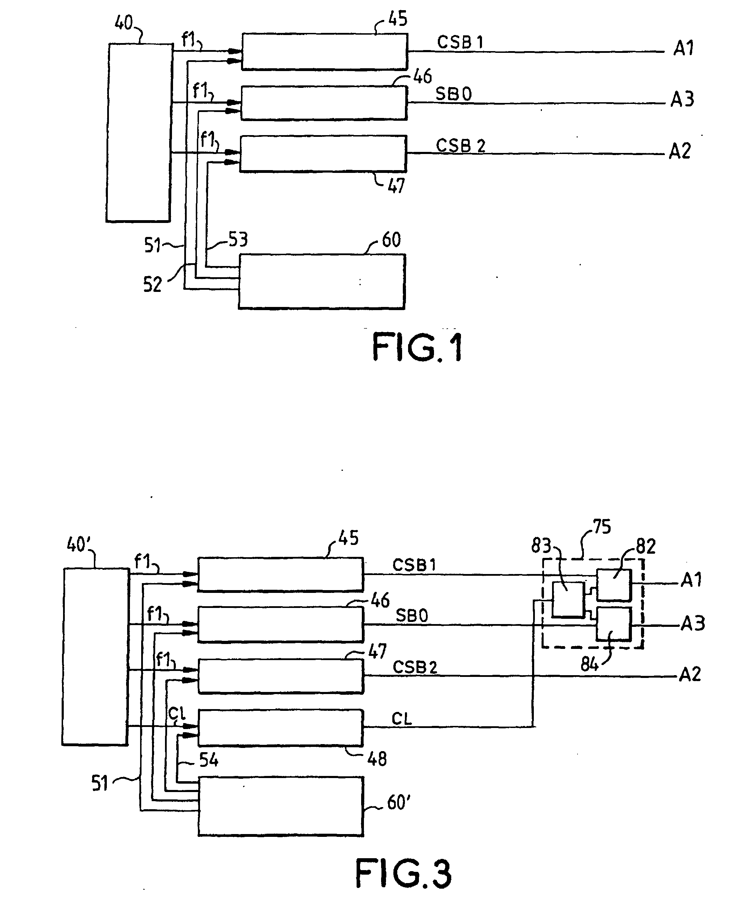

Eine in Fig. 1 gezeigte Sendeeinrichtung enthält einen Steuersender 40, der eine Hochfrequenz-Schwingung f1 (im folgenden als Führungs-Trägerschwingung bezeichnet) erzeugt, die im Ausführungsbeispiel eine Frequenz im Bereich von etwa 328 bis etwa 335 MHz hat. Die Führungs-Trägerschwingung f1 wird über je einen Ausgang je einem Modulator 45, 46 und 47 für die Erzeugung des Führungs-Signals zugeführt. Modulationseingänge der Modulatoren 45 - 47 sind über Modulationsleitungen 51 - 53 mit Ausgängen eines Modulationssignalgenerators 60 verbunden.

Der Modulationssignalgenerator 60 erzeugt derartige Modulationssignale, daß an den Ausgängen der Modulatoren 45, 46 und 47 modulierte Signale erscheinen, die unmittelbar den Antennen A1, A3 und A2 zugeführt werden können.

Bei Sendeeinrichtungen der hier beschriebenen Art ist es besonders wichtig, daß zwischen den Ausgangssignalen der verschiedenen Modulatoren eine konstante Phasendifferenz eingestellt ist und erhalten bleibt. Eine derartige Einrichtung ist durch die deutsche Offenlegungsschrift DE-A1-3029169 bekannt und ist auch im Ausführungsbeispiel der Erfindung vorgesehen. Hierzu ist eine Phasenmeßeinrichtung vorgesehen, die einen Abtastschalter (durch Halbleiterelemente verwirklicht) enthält, dem nacheinander die Ausgangssignale verschiedener Modulatoren zugeführt werden, die mit dem Referenzträger (= Führungs-Trägerschwingung f1), der von dem Steuersender 40 geliefert wird, verglichen werden. In der in DE-A1-3029169 näher beschriebenen Weise können dabei unerwünschte Phasenverschiebungen erkannt werden. Jedem einzelnen Modulator ist im Hochfrequenzweg ein steuerbarer Phasenschieber vorgeschaltet. Durch Zufuhr von Phasensteuersignalen zu den einzelnen steuerbaren Phasenschiebern können unerwünschte Phasenverschiebungen korrigiert werden. Auch Abweichungen der Amplitude der einzelnen Signale können erkannt und durch Korrektursignale korrigiert werden.

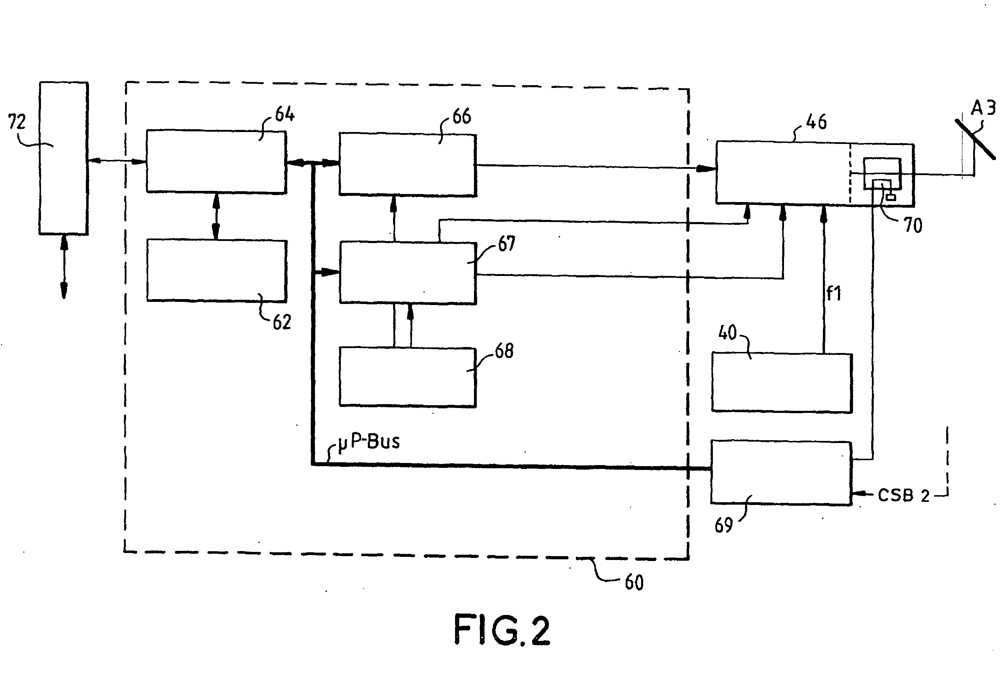

Wie Fig. 2 zeigt, enthält der Modulationssignalgenerator 60 in einem ersten digitalen Speicher 62 (im Beispiel einem ROM) die Werte je einer Sinuswelle einer Frequenz von 90 Hz und einer Frequenz von 150 Hz in ausreichend feiner Schrittweite. Hierzu wurde eine Schrittweite von 1° gewählt. Aus den beiden gespeicherten Wellen können beliebige Kombinationen von Mustern oder Wellenformen, die aus einer 90 Hz-Welle und einer 150 Hz-Welle gebildet werden können, mittels einer im Modulationssignalgenerator 60 enthaltenen Rechenvorrichtung 64 digital errechnet und anschließend in einem zweiten Speicher 66, 67 (RAM) als Amplitude und Phase digital gespeichert werden. Die gespeicherten Werte des Musters werden unter Verwendung eines Modulationsadresszählers 68 ausgegeben und durch einen Digital-Analog-Wandler und eine Glättungsvorrichtung (ebenfalls im Modulationssignalgenerator 60 enthalten) in eine analoge Wellenform gewandelt, die zur Modulation in den Modulatoren 45 bis 47 (und bei einer Anordnung nach Fig. 3 auch zur Modulation im Modulator 48) verwendet wird. In Fig. 2 ist zur Vereinfachung nur die Verbindung mit dem Modulator 46 gezeigt, der die Antenne A3 speist. Die Rechenvorrichtung 64 dient auch zur Regelung und enthält ein Mikroprozessorsystem.

Ein Regelungskoppler 69 führt Meßsignale, die die Phase und Amplitude der Antennenströme repräsentieren, und die im Beispiel durch Richtkoppler (70 für die Antenne A3) gewonnen werden, über einen Mikroprozessorbus der Recheneinrichtung 64 zu. Bei zu starker Abweichung von den Sollwerten erfolgt eine Regelung.

Eine Fernsteuereinheit 72 steht mit dem Modulationssignalgenerator 60 in Verbindung. Sie kann mit Hilfe eines Terminals bedient werden. Zur Verbindung mit weit entfernt angeordneten Steuereinrichtungen ist ein Modem zur Datenübertragung in ihr enthalten.

In der Anordnung der Fig. 3 wird (wie bei Fig. 1) die Führungs-Trägerschwingung f1 über je einen Ausgang des Steuersenders, der hier das Bezugszeichen 40' hat, je einem der Modulatoren 45, 46 und 47 für die Erzeugung des Führungs-Signals zugeführt. Außerdem wird eine weitere Frequenz f2, die von der Frequenz f1 einen Abstand von 16 kHz hat und im Beispiel niedriger ist als f1, an einem Ausgang Cl des Steuersenders 40' ausgegeben und einem Modulator 48 zur Erzeugung des Clearance-Signals zugeführt. Zusätzlich zu der in Fig. 1 gezeigten Anordnung ist auch ein Modulationseingang des Modulators 48 über eine Modulationsleitung 54 mit einem zugeordneten Ausgang des hier mit dem Bezugszeichen 60' bezeichneten Modulationssignalgenerators verbunden.

Zum Einspeisen des Clearance-Signals ist eine einfache Signalverteilerschaltung 75 vorhanden. Wie die Figur 3 zeigt, weist die Signalverteilerschaltung 75 im Gegensatz zu bisher erforderlichen komplizierten Lastverteilerschaltungen lediglich drei 3dB-Koppler 82 bis 84 auf, wobei die 3dB-Koppler 82 und 84 als Additionselemente wirken und der 3dB-Koppler 83 als Leistungsteiler wirkt, dessen Ausgänge je einen der anderen beiden 3dB-Koppler speisen. Dem anderen Eingang des 3dB-Kopplers 82 wird das Ausgangssignal des Modulators 45 zugeführt, und sein Ausgang speist die Antenne A1. Dem anderen Eingang des 3dB-Kopplers 84 wlrd das Ausgangssignal des Modulators 46 zugeführt und sein Ausgang speist die Antenne A3. Das Ausgangssignal des Modulators 47 wird nicht über einen der 3dB-Koppler geleitet, sondern wird unmittelbar der Antenne A2 zugeführt.

Die Modulationsgrade für die einzelnen Modulatoren sind im Beispiel wie folgt:
Modulator 45 (erzeugt CSB + SBO für Antenne A1): 90 Hz mit 46% und 150 Hz mit 34%;
Modulator 46 (erzeugt nur SBO für Antenne A3);
Modulator 47 (erzeugt CSB + SBO für Antenne A2): 90 Hz mit 64% und 150 Hz mit 16%;
Modulator 48 (erzeugt Clearance): 90 Hz mit 25% und 150 Hz mit 55%.

Es würde genügen, zur digitalen Errechnung und anschließenden analogen Erzeugung der Muster beispielsweise nur mit den einer viertel Wellenlänge einer Sinusschwingung einer einzigen Frequenz entsprechenden digital gespeicherten Werten auszukommen. Dies würde gegenüber dem oben beschriebenen Vorgehen, bei dem zwei vollständige Wellen unterschiedlicher Frequenz digital gespeichert sind, mehr Rechenaufwand erfordern.

Im Beispiel wird eine Amplitudenmodulation der Signale verwendet. Die Erfindung ist jedoch nicht hierauf begrenzt. Die Erfindung ist beispielsweise auch bei Phasenmodulation verwendbar.

## Patentansprüche

1. Gleitweg-Sendeeinrichtung für das Instrumentenlandesystem ILS mit mehreren Antennenstrahlern (A1, A2, A3), über die niederfrequent modulierte, unterschiedliche Träger- und Seitenbandanteile enthaltende Hochfrequenzsignale abgestrahlt werden, die sich im Fernfeld überlagern und dort ein von Luftfahrzeugen auswertbares Führungs-Signal bilden, wobei die Phasen der Trägerschwingungen der das Führungs-Signal bildenden abzustrahlenden Hochfrequenzsignale in einer festen Relation zueinander stehen, **dadurch gekennzeichnet, daß** für jedes der einem Antennenstrahler zugeführten Hochfrequenzsignale ein separater, digital gesteuerter Modulator (45, 46, 47) vorhanden ist, der Phase und Amplitude einer ihm zugeführten Hochfrequenzschwingung (f1) nach einem vorgegebenen Muster moduliert und das modulierte Hochfrequenzsignal in den ihm zugeordneten Antennenstrahler (A1, A3, A2) einspeist.

2. Einrichtung nach Anspruch 1, **dadurch gekennzeichnet, daß** ein Modulationssignalgenerator (60) zum Erzeugen des dem jeweiligen Modulator (45, 46, 47) zugeführten Musters vorgesehen ist, und daß der Modulationssignalgenerator (60) derart ausgebildet ist, daß er das Muster aufgrund mindestens einer in einem ersten Speicher (62) digital gespeicherten Wellenform erzeugt.

3. Einrichtung nach Anspruch 2, **dadurch gekennzeichnet, daß** dem Modulationssignalgenerator (60) ein zweiter Speicher (66, 67) zugeordnet ist, in dem korrigierte Stellwerte für den zugeordneten Modulator gespeichert sind.

4. Einrichtung nach einem der vorhergehenden Ansprüche, **dadurch gekennzeichnet, daß** Meßsignale, die für die abgestrahlten Hochfrequenzsignale bezüglich Amplitude und Phase charakteristisch sind, einer Regeleinrichtung zugeführt werden, dort mit Sollwerten verglichen werden, und daß dann, wenn die Meßsignale von den Sollwerten abweichen, eine Regelung vorgenommen wird, derart, daß mindestens eines der Muster verändert wird, bis der Sollwert erreicht ist.

5. Einrichtung nach einem der vorhergehenden Ansprüche, **dadurch gekennzeichnet, daß** eine Fernsteuereinrichtung (72) vorgesehen ist, die die Verbindung mit entfernt angeordneten Steuerungsgeräten ermöglicht, derart, daß durch die Fernsteuereinrichtung die Sendeeinrichtung aus der Ferne einstellbar und steuerbar ist.

6. Einrichtung nach einem der vorhergehenden Ansprüche, **dadurch gekennzeichnet, daß** sie zusätzlich zum Erzeugen eines Clearance-Signals ausgebildet ist, und daß Koppeleinrichtungen (82, 83, 84) vorgesehen sind, um das Clearance-Signal zu den gewünschten Antennen (A1, A3) zu koppeln.

7. Einrichtung nach einem der vorhergehenden Ansprüche, **dadurch gekennzeichnet, daß** sie zusätzlich zum Erzeugen eines Clearance-Signals ausgebildet ist, und daß das Clearance-Signal ebenfalls durch einen Modulator (48), der nach einem vorgegebenen Muster eingestellt wird, erzeugt wird.

## Claims

1. Glideslope transmitting device for the instrument landing system ILS comprising a number of antenna radiators (A1, A2, A3), via which audio-frequency modulated radio-frequency signals containing different carrier and sideband components are radiated, which heterodyne in the far field where they form a guide signal which can be evaluated by aircraft, the phases of the carrier oscillations of the radio-frequency signals to be radiated, which form the guide signal, being in a fixed relation to one another, **characterized in that** for each of the radio-frequency signals supplied to an antenna radiator, there is a separate digitally controlled modulator (45, 46, 47) which modulates the phase and amplitude of a radio-frequency oscillation (f1) supplied to it in accordance with a predetermined pattern and feeds the modulated radio-frequency signal into its associated antenna radiator (A1, A3, A2).

2. Device according to Claim 1, **characterized in that** a modulation signal generator (60) for generating the pattern supplied to the respective modulator (45, 46, 47) is provided and that the modulation signal generator (60) is constructed in such a manner that it generates the pattern on the basis of at least one waveform digitally stored in a first memory (62).

3. Device according to Claim 2, **characterized in that** the modulation signal generator (60) is associated with a second memory (66, 67) in which corrected control values for the associated modulator are stored.

4. Device according to one of the preceding claims, **characterized in that** measurement signals which are characteristic of the radiated radio-frequency signals with respect to amplitude and phase are supplied to a control device where they are compared with nominal values and that, if the measurement signals deviate from the nominal values, a control operation is performed in such a manner that at least one of the patterns is changed until the nominal value is reached.

5. Device according to one of the preceding claims, **characterized in that** a remote control device (72) is provided which provides for a connection to remotely arranged control devices, in such a manner that the transmitting device can be adjusted and controlled from a distance by the remote control device.

6. Device according to one of the preceding claims, **characterized in that** it is additionally constructed for generating a clearance signal and that coupling devices (82, 83, 84) are provided for coupling the clearance signal to the required antennas (A1, A3).

7. Device according to one of the preceding claims, **characterized in that** it is additionally constructed for generating a clearance signal and that the clearance signal is also generated by a modulator (48) which is adjusted in accordance with a predetermined pattern.

## Revendications

1. Emetteur de radioalignement de pente destiné au système d'atterrissage aux instruments ILS doté de plusieurs antennes (A1, A2, A3) émettant des signaux haute fréquence qui comportent des composantes différentes de porteuse et de bande latérale modulées basse fréquence et qui se superposent dans la région du champ lointain (zone de Fraunhofer) pour former un signal de guidage exploitable par les aéronefs, sachant que les phases des ondes porteuses des signaux haute fréquence formant le signal de guidage se trouvent dans une relation invariable les unes par rapport aux autres, **caractérisé en ce qu'**un modulateur séparé à commande numérique (45, 46, 47) est affecté à chacun des signaux haute fréquence envoyés à une antenne, qui module la phase et l'amplitude d'une oscillation haute fréquence (f1) reçue selon un modèle donné et alimente l'antenn qui lui est affecté (A1, 12, 13) avec le signal haute fréquence modulé.

2. Dispositif selon la revendication 1, **caractérisé en ce qu'**un générateur de signal de modulant (60) est prévu pour générer le modèle envoyé à chacun des modulateurs (45, 46, 47) et que le générateur (60) est conçu de manière à générer le modèle sur la base d'au moins une forme d'onde enregistrée dans une première mémoire (62) numérique.

3. Dispositif selon la revendication 2, **caractérisé en qu'**une deuxième mémoire (66, 67) est affectée au générateur de signal modulant (60) dans laquelle sont enregistrées des valeurs de réglage corrigées destinées au modulateur respectif.

4. Dispositif selon l'une des revendications précédentes, **caractérisé en ce que** les signaux de mesure, dont l'amplitude et la phase sont caractéristiques des signaux haute fréquence envoyées, sont transmis à un dispositif de réglage où ils sont comparés à des valeurs de consigne, et qu'en cas d'écart, un réglage est effectué de manière qu'au moins un des modèles est modifié jusqu'à atteindre la valeur de consigne.

5. Dispositif selon l'une des revendications précédentes, **caractérisé en ce qu'**un dispositif de télécommande (72) est prévu pour communiquer avec des dispositifs de commande à distance de manière à permettre le réglage et la commande de l'émetteur à distance.

6. Dispositif selon l'une des revendications précédentes, **caractérisé en ce qu'**il est de plus conçu pour générer un signal de clearance et que des dispositifs de couplage (82, 83, 84) sont prévus pour coupler le signal de clearance aux antennes respectives (A1, A2, A3).

7. Dispositif selon l'une des revendications précédentes, caxactérisé en ce qu'il est de plus conçu pour générer un signal de clearance et que le signal de clearance est également généré par un modulateur (48) réglé selon un modèle donné.
